## Europäisches Patentamt
## European Patent Office
## Office européen des brevets

(11) Publication number: **0 168 985**
**A1**

(12)
# EUROPEAN PATENT APPLICATION

(21) Application number: **85304397.4**

(22) Date of filing: **20.06.85**

(51) Int. Cl.⁴: **A 47 J 37/04**, A 47 J 27/62, G 05 D 23/24

(30) Priority: **28.06.84 US 625382**

(43) Date of publication of application: **22.01.86 Bulletin 86/4**

(84) Designated Contracting States: **DE FR GB IT**

(71) Applicant: **KIDDE CONSUMER DURABLES CORP., 1500 Bassett Avenue, Bronx New York 10461 (US)**

(72) Inventor: **Johanson, Norman W., 135 Princeton Drive, Huntington Connecticut 06484 (US)**
Inventor: **Weinman, David S., 11 Otsego Place, Jericho New York 11753 (US)**

(74) Representative: **Thomson, Roger Bruce, POLLAK MERCER & TENCH High Holborn House 52-54 High Holborn, London WC1V 6RY (GB)**

(54) **Electronic controller and method for operating rotary cooking machine.**

(57) An electronic controller (10) for a rotary cooking machine of the type having a cooking vessel rotatable about its longitudinal axis, a drive motor (34) for rotating the cooking vessel, a heating element (32) disposed adjacent the cooking vessel for heating the contents thereof, and a temperature probe (24) for providing a temperature signal indicative of the temperature of the vessel contents is characterized by a keyboard (12), a display (14), reference signal generation circuitry and a microcomputer (16) operatively connected to the keyboard (12), the display (14), the heating element and the reference signal generation circuitry. The microcomputer (16) is programmed to receive indications of desired cooking temperature and cooking time, and to initiate a cooking cycle only after the temperature of the vessel contents has initially reached the desired cooking temperature. In three modes of operation the heating element (32) is cycled on and off to maintain the desired cooking temperature. In a fourth mode of operation the heating element (32) is constantly on during the cooking cycle. When the cooking cycle has ended, the heating element (32) is de-energized and a tone is sounded.

-1-

## ELECTRONIC CONTROLLER AND METHOD
## FOR OPERATING ROTARY COOKING MACHINE

### Background of the Invention

The present invention is directed to an apparatus and method for controlling a cooking machine. Specifically, the present invention is directed to an electronic controller and method for operating a rotary cooking machine.

Rotary cooking machines are known. See U.S. Patent 4,450,758 (Belinkoff et al.) directed to a rotary cooking device, incorporated herein by reference. See also U.S. patent 4,304,177 (Loeffler et al.), now reissue application Serial No. 544,025 filed October 21, 1983 directed to a food cooking apparatus, U.S. Patent 4,120,981 (Burkhart) directed to a method of cooking food, and U.S. Patent 4,048,473 (Burkhart) directed to a food cooking machine, all of which are also incorporated herein by reference.

Aforementioned U.S. Patent 4,304,177 discloses a rotary cooking machine of the type having an open mouthed, rotatable vessel, a drive motor for rotating the vessel about its longitudinal axis, a lid for closing the open mouth of the vessel and having an air vent, a heating element disposed adjacent to the vessel for applying heat to the vessel and its contents and a temperature probe extending through the lid and protruding into the vessel for sensing the temperature of the contents of the vessel

2872-114

and providing a temperature signal indicative of the
temperature. Aforementioned U.S. Patents 4,450,758 and
4,304,177 also disclose a keyboard for entering indications
of desired cooking time and cooking temperature and a
display for providing indications of the entered data and
other data, such as remaining cooking time.

Aforementioned U.S. Patent 4,304,177, further discloses a microprocessor based control circuit for a rotary
cooking device. The present application is directed to an
improvement over the control circuit disclosed in U.S.
Patent 4,304,177 and to a method of controlling a rotary
cooking device and the type disclosed in U.S. Patents
4,450,758 and 4,304,177.

## Summary of the Invention

A controller for a rotary cooking machine of the type
previously described and disclosed in the aforementioned
U.S. patents comprises a keyboard for selecting desired
cooking time and cooking temperature and a display panel
for displaying the selections of cooking time and cooking
temperature. The display panel also displays remaining
cooking time once the cooking cycle has begun. The controller further comprises a first reference signal generator for providing up to four discrete reference signals.
The first reference signal generator comprises a voltage
divider circuit having a node providing the first reference
signal. First and second switch means are operable under
control of a microcomputer, to selectively place first and
second resistors in the voltage divider circuit and thereby
change the magnitude of the first reference signal appearing at the node of the voltage divider, according to the
selected cooking temperature entered into the keyboard.

The controller also comprises second and third
reference signal generators, which in the preferred embodiment are also voltage dividers, for providing second and
third signals having magnitudes representative of the minimum and maximum acceptable magnitudes, respectively, of the temperature signal. First, second and third comparators are provided for comparing the magnitude of the temperature signal to each of the first, second and third reference signals, respectively. The first comparator provides an indication whether the magnitude of the temperature signal is less than or greater than the magnitude of the first reference signal, i.e., whether the temperature of the contents of the vessel have reached the selected cooking temperature. The second comparator provides an indication whether the magnitude of the temperature signal is less than the magnitude of the second reference signal, i.e., whether the thermistor in the temperature probe is shorted to ground and thus defective. The third comparator provides an indication whether the magnitude of the temperature signal is greater than or equal to the magnitude of the third reference signal, i.e., whether the thermistor in the probe is open. The third comparator will also provide this indication if the output of the temperature probe has not been provided to the controller circuit, i.e., if the temperature probe is not plugged into the circuit.

Also associated with the controller is a sound generator which provides audible "beeps" or other short bursts of sound upon the occurrence of certain events. For example, the sound generator will produce an audible sound when a cooking cycle has been completed.

The aforementioned microcomputer is also operatively connected to the keyboard, to the first, second and third comparators, to the first and second switch means associated with the first reference signal generator, and also to the heating element, sound generator and display. The microcomputer is programmed to supply actuating signals to the first and second switch means to alter the magnitude of the first reference signal according to the selected cooking temperature. When the signal from the first comparator indicates that the magnitude of the temperature signal is less than the magnitude of the first reference signal, the microcomputer energizes the heating element. In three cooking modes available to the user, the microcomputer de-energizes the heating element when the signal from the first comparator indicates that the magnitude of the temperature signal is greater than or equal to the magnitude of the first reference signal. In a fourth cooking mode, the heating element remains energized during the entire cooking cycle so that heat is constantly applied to the vessel contents. The microcomputer is programmed to be responsive to an "active" indication from either one of the second or third comparators to de-energize the heating element. Thus, the heating element is de-energized when the second or third comparator provides a "defect signal" due to an open or shorted probe or due to a probe not having been plugged into the controller circuit. The microcomputer is also programmed to initiate a cooking cycle equal in duration to the selected cooking time entered into the keyboard only after the first comparator initially provides the indication that the magnitude of the temperature signal has reached or exceeded the magnitude of the first reference signal. That is, the selected cooking time begins to run only after the temperature of the vessel contents have reached the selected cooking temperature. The microcomputer is responsive to the completion of the timing cycle to deenergize the heating element and also to energize the sound generator to indicate that cooking is completed. The microcomputer is further responsive to the indications from either one of the second or third comparators to energize the sound generator. That is, the sound generator is energized when a defective or removed probe is sensed.

The microcomputer is programmed to be responsive to a power up condition to initiate a diagnostic routine to test the temperature probe and the display. Specifically, the microcomputer senses the transition of an on/off switch from the "off" position to the "on" position, and in response thereto, initiates the diagnostic routine. In one mode, the diagnostic routine reads the outputs of the second and third comparators and checks for the presence of a "defect signal", i.e., an indication from one of the second or third comparators that the thermistor is open or shorted. In another mode, the diagnostic routine sequentially energizes each of the segments in the display so that the operator thereof can determine that all segments are operable.

The microcomputer is also responsive to the status of the on/off switch so that it accepts cooking temperature data entered into the keyboard only when the switch is in the "off" position.

## Brief Description of the Drawings

Figure 1 is a block diagram of an electronic controller for a rotary cooking machine according to the invention.

Figure 2 is a schematic diagram of the first, second and third reference signal generators and the first, second and third comparators for comparing the temperature signal to the reference signals.

Figures 3-7 are flow charts of the control algorithm employed by the electronic controller of the present invention.

## Detailed Description of the Invention

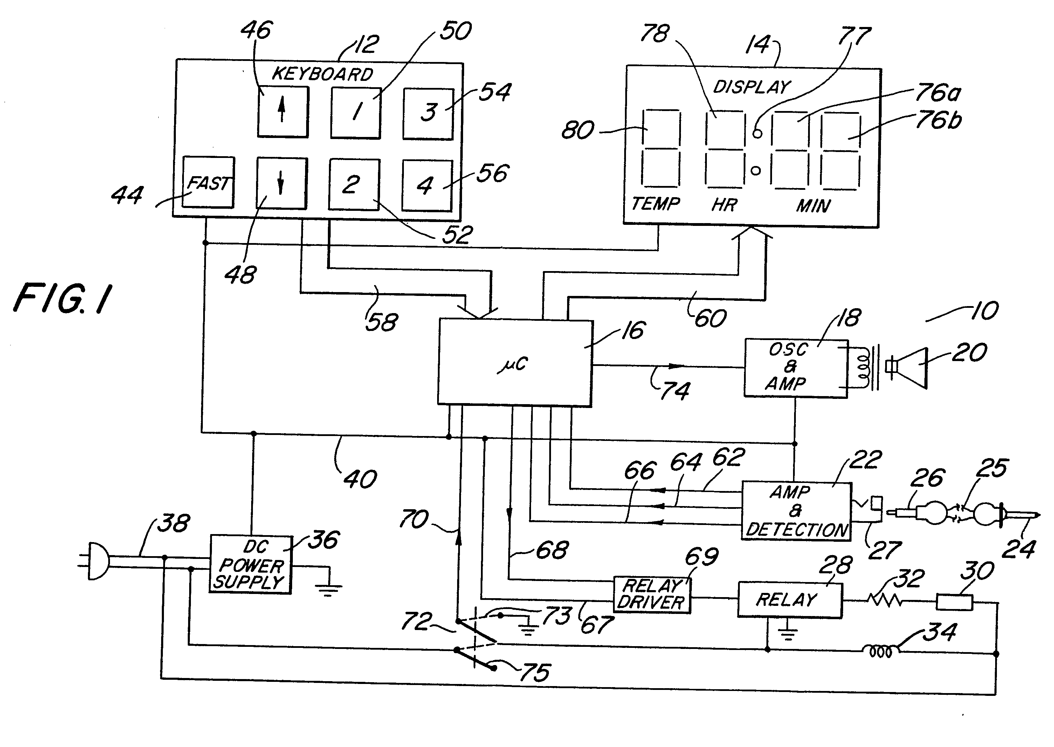

Referring now to the drawings, wherein like numerals represent like elements, there is illustrated in Figure 1 an electronic controller according to the present invention and labelled generally 10. Controller 10 comprises a data entry means 12, which in the preferred embodiment is a keyboard. Keyboard 12 comprises a plurality of keys 44, 46, 48, 50, 52, 54 and 56 as will be explained in detail hereinafter.

Controller 10 also comprises a display 14 comprising plural displays 76a, 76b, 78 and 80. Displays 76a, b and 78 are labelled "MIN" and display 78 is labelled "HR".
Together, displays 78 and 76a, 76b are used to display the
selected cooking times entered into the controller 10 via
keyboard 12, and also to display the remaining cooking time
once a cooking or timing cycle has been initiated. Note
that the terms "cooking cycle" and "timing cycle" are used
interchangably herein. Display 80 is labelled "TEMP" and
displays the selected cooking temperature entered into
the controller 10 by means of keyboard 12. Actually, as
will well become apparent hereafter, the display 80 displays a selected cooking mode 1-4. However, the selected
mode 1-4 determines the cooking temperature and hence the
numeral displayed by display 80 is an indication of the
desired cooking temperature.

The heart of controller 10 is a microcomputer 16. In
the preferred embodiment, microcomputer 16 is a General
Instruments Model PIC-1650 microprocessor. Microcomputer
16 communicates with keyboard 12 via bus 58 and with display 14 via bus 60. The operation of microcomputer 16 will
be described in detail herein.

Control circuit 10 also comprises an oscillator and
amplifier 18 receiving signals from microcomputer 16 via a
conductor 74. Oscillator and amplifier 18 drives an
audible sound generator 20. The sound generator 20 may be
a speaker or other similar audible sound-producing device.
Alternatively, oscillator and amplifier 18 and sound generator 20 may be combined in one unit such as a piezoelectric
sound generator or a SONALERT® device. In this manner, the
signal on conductor 74 may drive the piezoelectric generator without the need of oscillator and amplifier 18.

Amplifier and detection circuitry 22 receives a
temperature signal produced by a temperature sensing means
24. The temperature sensing means 24, also referred to
herein as a temperature probe, generates a signal having a
magnitude representative of the temperature of the probe,
and hence of the vessel contents. As will be explained,
the temperature probe 24, in the preferred embodiment,
comprises a thermistor. The signal produced by temperature probe 24 is provided to a plug 26 by means of conductors 25. Plug 26 is adapted to fit into and make electrical connection with a jack 27 for the purpose of providing the temperature signal to the amplifier and detection circuitry 22. The function of amplifier and detection circuitry 22 is two-fold. First, circuit 22 provides an indication whether the magnitude of the temperature signal is between preselected limits which are determined to be acceptable. That is, circuit 22 compares the magnitude of the temperature signal to upper and lower limits, and if the magnitude of the temperature signal is either greater than or equal to the upper limit, or is less than the lower limit, a "defect signal" is supplied to microcomputer 16 over one of the conductors 64, 66. The second function of circuit 22 is to provide an indication that the magnitude of the temperature signal has reached the magnitude of a reference signal which has a value indicative of the selected cooking temperature. That is, amplifier and detection circuit 22 provides an indication that the temperature of the vessel contents have reached the selected cooking temperature. A signal is provided on conductor 62 to microcomputer 16 when this condition is fulfilled.

As explained more fully in U.S. Patents 4,450,758 and 4,304,177, the rotary cooking device used in connection with the present invention has a heating element 32 disposed adjacent the vessel for heating the contents thereof. The rotary cooking device also has associated therewith a drive motor 34 for rotating the vessel. The heating element 32 is responsive to a heater control means 28, which in the preferred embodiment is a relay driver circuit 69 receiving signals on conductor 68 from microcomputer 16. It will be appreciated that heating element 32 and drive motor 34 are operable only when a double pole, single throw switch 72 is in the closed or "on" position 73. When switch 72 is closed, drive motor 34 is always energized. However, heater 32 will be energized only if switch 72 is closed and an energizing signal is present on conductor 68.

Inline with the heating element 32 is a thermal fuse 30 which is provided for safety. Thermal fuse 30 opens if heating element 32 exceeds a predetermined temperature limit.

Double pole, single throw switch 72 is also used to provide an indication to microcomputer 16 of the status of the switch. Thus, when the switch 72 is closed or in the "on" position 73, a low or ground level is presented at an input of microcomputer 16 via conductor 70. When switch 72 is in the open or "off" position 75, a high level, or positive voltage is presented to the input of microcomputer 16.

A DC power supply 36 supplies dc power to the keyboard 12, display 14, microcomputer 16, oscillator and amplifier 18, amplifier and detection circuitry 22 and relay driver 69 via conductor 40. DC power supply 36 receives AC power along lines 38 by a conventional plug adapted to fit into a conventional AC household receptical. AC power is also provided to relay contacts in relay 28 and to motor 34 via switch 72.

As previously mentioned, keyboard 12 comprises a plurality of keys 44, 46, 48, 50, 52, 54 and 56. The function of these keys will now be described in detail. Keys 50, 52, 54 and 56 are utilized for the purpose of selecting various desired cooking temperatures at which it is desired to cook the contents of the vessel. In the preferred embodiment, each one of the keys 50, 52, and 54 is dedicated to a preselected temperature. Thus, key 50 corresponds to a first temperature, key 52 corresponds to a second temperature and key 54 corresponds to a third temperature. Key 56 is dedicated to another function which will be explained. The temperatures corresponding to each of the keys 50, 52 and 54 are preprogrammed into the memory of microcomputer 16, and may be selected as desired. Thus, in the preferred embodiment, three cooking temperatures are available to the user. The user selects the first cooking temperature by simply depressing key 50. Similarly, the user selects the second temperature by depressing key 52, etc. The selections are supplied via bus 58 to microcomputer 16, where they are temporarily stored in a section of memory. Microcomputer 16 is responsive to the status of switch 72 to accept data entered via keys 50, 52, 54 and 56 only when switch 72 is in the open or "off" position 75. Thus, it is not possible to change the cooking temperature when switch 72 is on closed or "on".

Microcomputer 16 is programmed to respond somewhat differently to temperature selection 4, i.e., depression of key 56. When key 56 has been depressed and switch 72 is in the "closed" position 73, microcomputer 16 energizes heating element 32 via relay 28 when a cooking time is entered. As before, the cooking or timing cycle entered into the keyboard does not begin to run until the vessel contents have reached a preselected temperature associated with key 56 (programmed into microcomputer 16). The difference between the function of key 56 and keys 50, 52 and 54 is that, when in cooking mode 4 (key 56), microcomputer 16 maintains heating element 32 energized throughout the entire cooking cycle, i.e., heat is applied to vessel for the entire cooking time. Thus, in mode 4, the heating element is not de-energized once a preselected temperature has been reached. The only response of microcomputer 16, in mode 4, to the vessel contents initially reaching the temperature associated with mode 4 is to begin the timing cycle.

Keys 44, 46 and 48 are provided for the purpose of selecting the desired cooking time. Actually, the keys 46 and 48 are used for selecting the cooking time, while the key 44 complements the use of keys 46 and 48. The microcomputer 16 is programmed to be responsive to the depression of key 46 to increment the desired cooking time, and responsive to the depression of key 48 to decrement the desired cooking time. Thus, the microcomputer 16 advances, or increments the cooking time one minute each time key 46 is depressed and decreases or decrements the cooking time by one minute each time key 48 is depressed. Alternatively, and in the preferred embodiment, microcomputer 16 may be programmed to continuously increment the cooking time for as long as key 46 is depressed and to continuously decrement the cooking time for as long as key 48 is depressed. Key 44 is provided for this preferred method. If keys 46 and 44 are simultaneously depressed, the cooking time is incremented at a faster than normal rate. If keys 44 and 48 are simultaneously depressed, the cooking time is decremented at a faster than normal rate. The signals from key 44, 46 and 48 are provided via bus 58 to microcomputer 16 so that microcomputer 16 may alter the cooking time, as instructed by the user. The above-described techniques may be implemented using programming techniques well-known to those skilled in the art.

Microcomputer 16 communicates via bus 60 with display 14 to provide displays of the selected cooking temperature (i.e., the selected temperature designation 1-4) and selected cooking time entered via keyboard 12. Specifically, display 80 displays the selected temperature, 1 (key 50), 2 (key 52), 3 (key 54) or 4 (key 56) as entered into the keyboard 12 by the user. Displays 76, 78 display the cooking time entered by the user. Thus, display 78 displays the total number of desired cooking hours, and displays 76a, 76b display the desired number of cooking minutes. It will be appreciated that, depending on which one of switches 44, 46 and 48 are currently being depressed, the indications on displays 76, 78 will be altered to display the selected cooking time. The selected cooking temperature and cooking time displayed on display 14 are stored in a section of memory of microcomputer 16 for later use, as will be described.

In the preferred embodiment and as illustrated in Figure 1, display 14 comprises a plurality of multiple segment displays. Conventional seven-segment displays may be used. Additionally, it is preferred that display 14 be a conventional, well-known multiplexed display. Thus, microcomputer 16 continuously updates display 14 to provide multiplexed data thereto for the purpose of displaying desired cooking temperature and desired cooking time.

As will be explained herein, after a timing cycle or cooking cycle is initiated, the desired cooking time displayed on displays 76, 78 is decremented under commands from microcomputer 16 to provide a display of actual remaining cooking time. That is, after the desired cooking time has been entered, and the cooking cycle or timing cycle has been initiated, the actual remaining cooking time is displayed on displays 76a, 76b and 78.

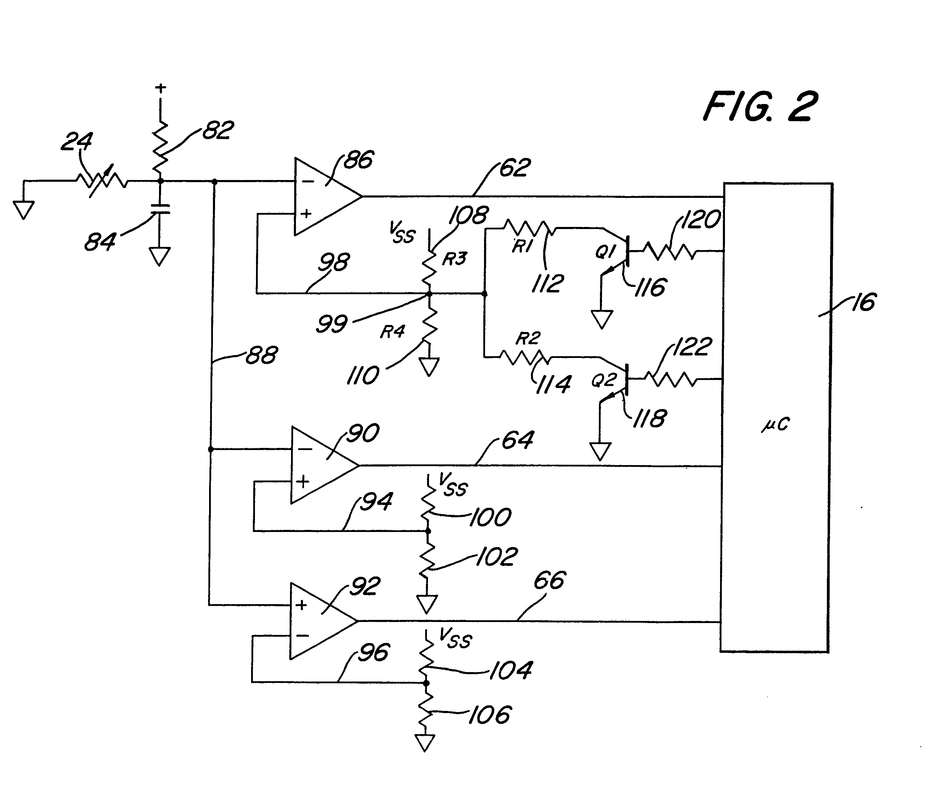

Referring now to Figure 2, the details of amplifier and detection circuitry 22 will be explained. As illustrated in Figure 2, the temperature probe or thermistor 24 provides a temperature signal on a conductor 88 to three comparators 86, 90 and 92. A pull-up resistor 82 is provided and has a value selected such that the normal range of the temperature signal falls between preselected upper and lower limits. A filter capacitor 84 is also provided to remove electrical noise. The temperature signal on conductor 88 is provided to the inverting input of first comparator 86, to the inverting input of second comparator 90 and to the non-inverting input of third comparator 92. The non-inverting input of first comparator 86 receives a first reference signal on conductor 98 from a first reference signal generation circuit to be described in detail. It will be appreciated that first comparator 86 provides a signal level on conductor 62 indicative of the magnitude of the temperature signal on conductor 88 relative to the magnitude of the first reference signal on conductor 98. Specifically, first comparator 86 provides a first signal level when the magnitude of the temperature signal is less than the magnitude of the first reference signal and a second signal level when the magnitude of the temperature signal is greater than or equal to the magnitude of the first signal.

Similarly, second and third comparators 90, 92 provide indications respecting the relative magnitudes of the temperature signal and second and third reference signals respectively. Specifically, a second reference signal is applied to the non-inverting input of second comparator 90 via conductor 94. The second reference signal is derived from the node of a voltage divider comprising resistors 100 and 102. The magnitude of the second reference signal is chosen to approximate a minimum acceptable temperature signal level. As will be appreciated by those skilled in the art, the magnitude of the second reference signal is selected according to the relative values of resistors 100 and 102, and the value of the supply voltage, $V_{ss}$. As will further be appreciated, second comparator 90 provides a first signal level if the magnitude of the temperature signal on conductor 88 is less than the magnitude of the second reference signal on conductor 94, and provides a second signal level if the magnitude of the temperature signal on conductor 88 is greater than or equal to the magnitude of the second reference signal on conductor 94.

Third comparator 92 provides an indication on conductor 66 respecting the relative magnitudes of the temperature signal on conductor 88 and the magnitude of a third reference signal on conductor 96. As shown, the third reference signal is applied to the inverting input of comparator 92 and is derived from the node of a voltage divider comprising resistors 104, 106. The magnitude of the third reference signal is chosen to approximate a maximum acceptable temperature signal level. As will be appreciated by those skilled in the art, the magnitude of the third reference signal is selected according to the relative values of resistors 104, 106 and the supply voltage, $V_{ss}$. Thus, comparator 92 provides a first signal level if the magnitude of the temperature signal on conductor 88 is greater than or equal to the magnitude of the third reference signal on conductor 96, and a second signal level if the magnitude of the temperature signal on conductor 88 is less than the magnitude of the third reference signal on conductor 96.

The signals provided to microcomputer 16 on conductor 64 and 66 are referred to herein as "defect signals". The presence of an "active" signal on either of these conductors is indicative of a probable defect in the temperature probe 24. Thus, if the magnitude of the temperature signal 88 falls below the magnitude of the second reference signal on conductor 94, an "active" signal appears on conductor 64, and is indicative of a probable short or ground condition in the voltage probe. On the other hand, if the magnitude of the voltage signal on conductor 88 equals or exceeds the magnitude of the third reference signal on conductor 96, an "active" signal appears on conductor 66 and is indicative of a probable open circuit condition in temperature probe 24. Alternatively, the presence of an "active" signal on line 64 may be indicative that the plug 26 of temperature probe 24 has not been plugged into the jack 27.

The details of the first reference signal generation circuit will now be explained. The first reference signal generation circuit for providing the reference signal on conductor 98 is a voltage divider comprising resistors 108 and 110. The first reference signal is derived from the node 99 at the connection of resistors 108, 110. Also connected to the node is a resistor 112, also designated R1. The other end of resistor R1 is connected to the collector of a transistor 116, also designated Q1. The emitter of transistor Q1 is connected to ground, and the base terminal thereof receives digital or logic signals from microcomputer 16 via base resistor 120. Also connected to the node is a resistor 114, also designated R2. The other end of resistor R2 is connected to the collector of a transistor 118, also designated Q2. The emitter of transistor Q2 is connected to ground and the base terminal thereof receives digital or logic signals from microcomputer 16 via base resistor 122. As will become apparent

hereinafter, transistors Q1 and Q2 operate as switches which are actuable according to the digital or logic signals provided by microcomputer 16. Thus, transistors Q1 and Q2 could be replaced with any other switching device which is externally actuable between conducting and nonconducting states.

The voltage $V_{REF}$ at node 99 when both transistors Q1 and Q2 are non-conducting is given by the formula:

$$V_{REF} = \left( \frac{V_{SS}}{R3 + R4} \right) R3$$

The voltage $V_{REF}$ at node 99 when transistor Q1 is conducting and transistor Q2 is non-conducting is given by the formula:

$$V_{REF} = \left( \frac{V_{SS}}{R3 + (R4//R1)} \right) R3$$

The voltage $V_{REF}$ at node 99 when transistor Q1 is nonconducting and transistor Q2 is conducting is given by the formula:

$$V_{REF} = \left( \frac{V_{SS}}{R3 + (R4//R2)} \right) R3$$

The voltage $V_{REF}$ at node 99 when both transistors Q1 and Q2 are conducting is given by the formula:

$$V_{REF} = \left( \frac{V_{SS}}{R3 + (R4//R1//R2)} \right) R3$$

Thus, the magnitude of the first reference signal $V_{REF}$ appearing at node 99 is adjustable to one of four predetermined voltages according to the status of transistors or switches Q1 and Q2. Although, in the preferred embodiment, the magnitude of the first reference signal is variable among four different voltages, it should be understood that any desired range could be provided, simply by adding additional circuitry, such as additional transistors and resistors.

The voltage at node 99, which is the magnitude of the first reference signal, is thus adjustable according to the digital or logic signals applied to the bases of transistors Q1 and Q2. Thus, a logic "0" applied to the base of both transistors would result in a first magnitude of the first reference signal. A logic "0" applied to the base of transistor Q1 and logic "1" applied to the base of transistor Q2 would result in a second value of the first reference signal, etc. The logic signals are applied to the bases of transistors Q1 and Q2 according to the temperature setting or mode (1-4) selected by the user. Thus, microcomputer 16 may be responsive to apply logic "0"'s to the bases of both transistors Q1 and Q2 if temperature setting "1" has been selected. Similarly, microcomputer 16 may be responsive to apply a logic "0" to the base of transistor Q1 and logic "1" to the base of transistor Q2 if temperature setting "2" has been selected. A logic "1" could be applied to the base of transistor Q1 and a logic "0" could be applied to the base of transistor Q2 in response to the selection of temperature setting "3". Logic "1's" would be applied to both bases in response to the selection of temperature setting "4".

The control algorithm for the aforementioned control circuit will now be described.

In the preferred embodiment, the control algorithm is a computer program stored in a memory section of microcomputer 16. The control algorithm is responsive to certain events to perform the control functions described.

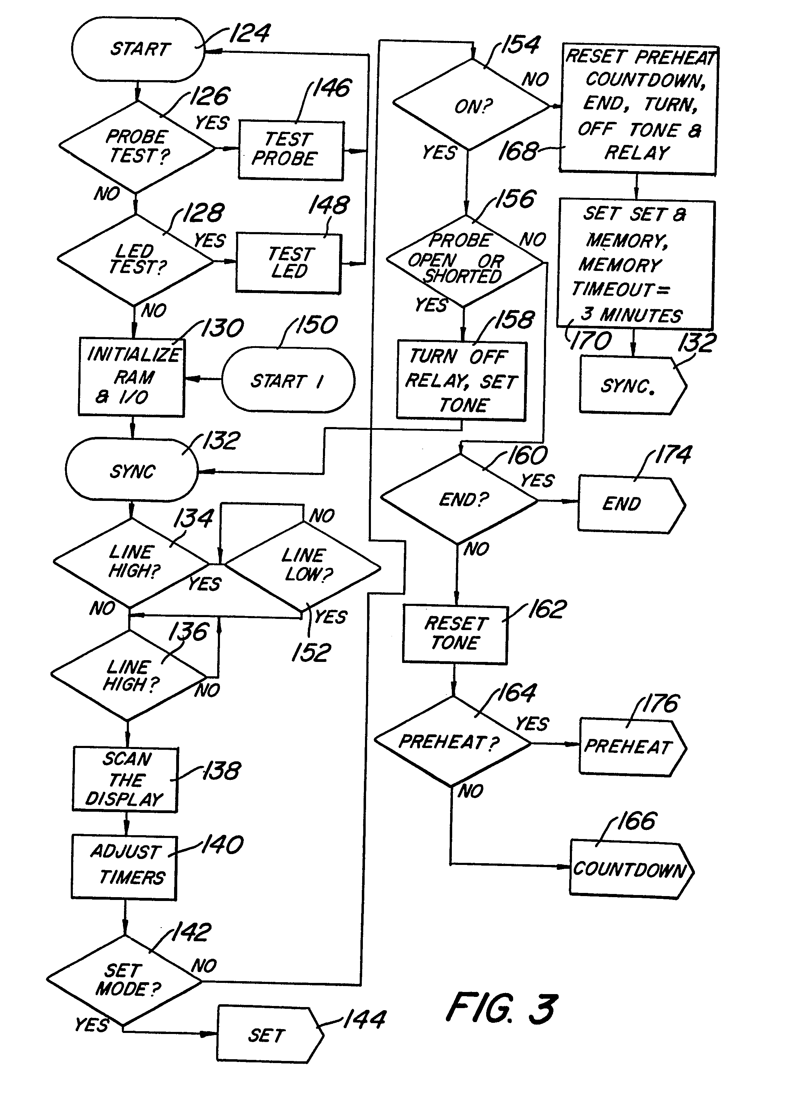

Referring now to Figure 3, the program is vectored to a routine identified as START and labelled 124. Program control is initially vectored to routine 124 upon sensing a transition in switch 72 from the open or "off" position to the closed or "on" position. Control immediately passes to block 126 where the algorithm determines whether it should perform the first diagnostic, i.e., the diagnostic to test the temperature probe. The temperature probe diagnostic is activated by depressing selected keys on the keyboard 12 while simultaneously flipping switch 72 from the off to the on position. Thus, at block 126, microcomputer 16 examines the selected keys of keyboard 12, and if they are depressed, control is passed to block 146. At block 146, the signal levels on conductors 64 and 66 are examined for the presence of a defect signal on either conductor. The result of the test is provided on the display 14 by displaying thereon a selected numeral indicative of the result of the test. For example, the microcomputer could be programmed to display the numeral "0" for a good probe, the numeral "1" for an open probe, and the numeral "2" for a shorted probe. Control next passes to block 128 where it is determined whether the second diagnostic, i.e., the display test diagnostic, should be performed. At block 128, microcomputer 16 examines the status of other selected keys on keyboard 12 to see if they are depressed when the start routine is entered, i.e., when the switch 72 is flipped from the off to the on position. If the selected keys are depressed, control is passed to block 148 where the microcomputer enters a routine which sequentially energizes each of the segments of the multiple segment display 14. During this diagnostic test, the user examines the display to insure that each of the segments are illuminated.

If none of the selected keys are depresssed during start-up, control passes to block 130 where the program initializes its RAM and/I/O PORTS and a SET flag associated with another routine SET is set active. The SET routine 144 will be described in detail hereinafter. In sum, the SET routine reads the temperature and time data entered into the keyboard 12 and displays that data on the keyboard 14. The SET routine 144 also sets internal timers used in the control algorithm.

Control next passes to the SYNC routine 132. At steps 134, 136 and 152 of the SYNC routine 132, the AC line voltage is monitored for a low to high transition (i.e., an AC zero line crossing). Thus, blocks 134, 136 and 152 define a loop which is not exited until a low to high transition on the AC line occurs. When a low to high transition occurs, control is passed to block 138, which scans the display in the following manner. All digits are turned off (by de-energizing their anodes), setting the appropriate segments for the digit being displayed (by setting the selected cathodes) turning on the selected digit (one of the anodes) and waiting for a fixed amount of time. This procedure is repeated four times, once for each digit, whenever the SYNC module is executed. Thus, at step 138, the display 14 is updated to provide either the new data entered into the keyboard or to display the selected temperature setting and actual remaining cooking time as computed by the internal timer built into the program, as will be explained.

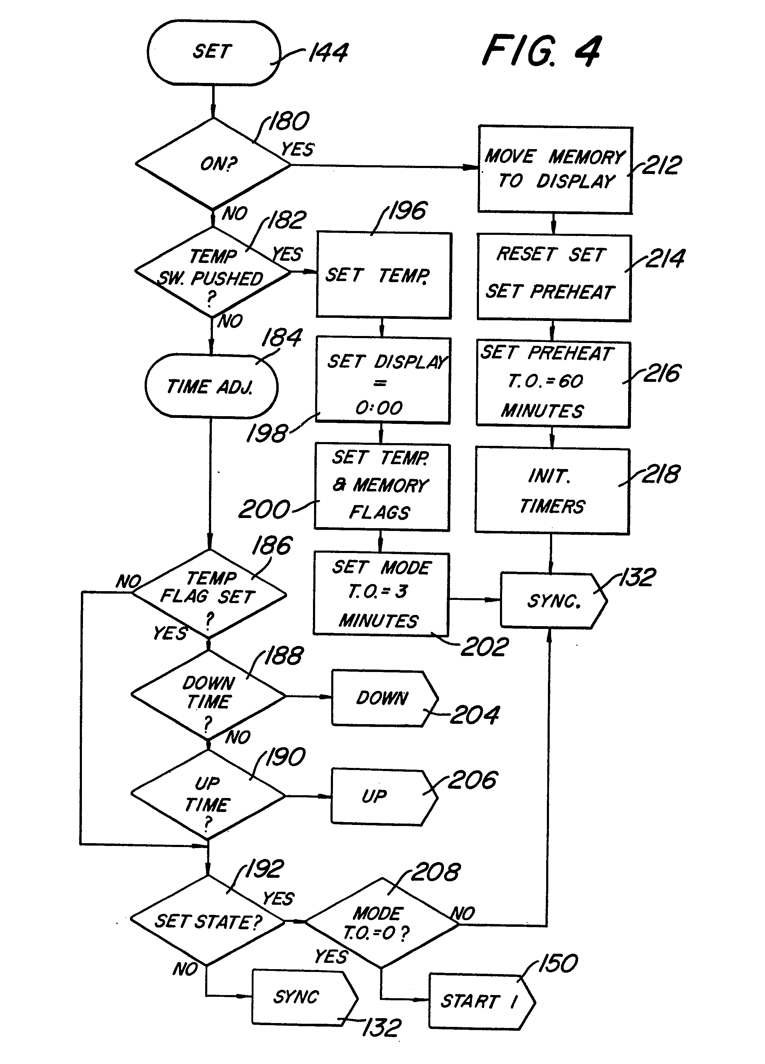

Control next passes to block 140 where the previously mentioned internal timers are adjusted. Thus, all internal timers are adjusted each time there is a low to high transition on the AC line, and each count of the timers is 16.67 milliseconds (1/60th of a second). The internal timers will be explained in detail hereinafter. Control next passes to block 142 where the SYNC routine 132 determines whether the SET flag is active. Recall that, at block 130, the SET flag was set active, so that the first time that the program reaches block 142, control will pass to the SET routine 144 (Figure 4). Assuming, however, that this is not the first pass, and the SET flag is inactive, control passes to block 154 where the status of switch 72 is examined.  If switch 72 is off, control passes
to block 168 where flags for software routines called
PREHEAT, COUNTDOWN and END are reset (set inactive).  The
signal on line 74 is set inactive so that sound generator
20 is off, and the signal on line 68 is set inactive so
that the relay 28 associated with heating element 32, and
hence the heater 32 are off.  At block 170, the display is
blanked by de-energizing the anodes, by sending appropriate
signals on bus 60, and the current selected temperature
(1-4) is stored in the memory.  A software timer called
"memory mode timeout" is set to three minutes and the flag
for the SET routine 144 is set active.  Control is then
passed to the SYNC routine 132.  Since the SET flag is
set active during the next pass through the SYNC routine
132, control will pass to the SET routine 144 at block 142.

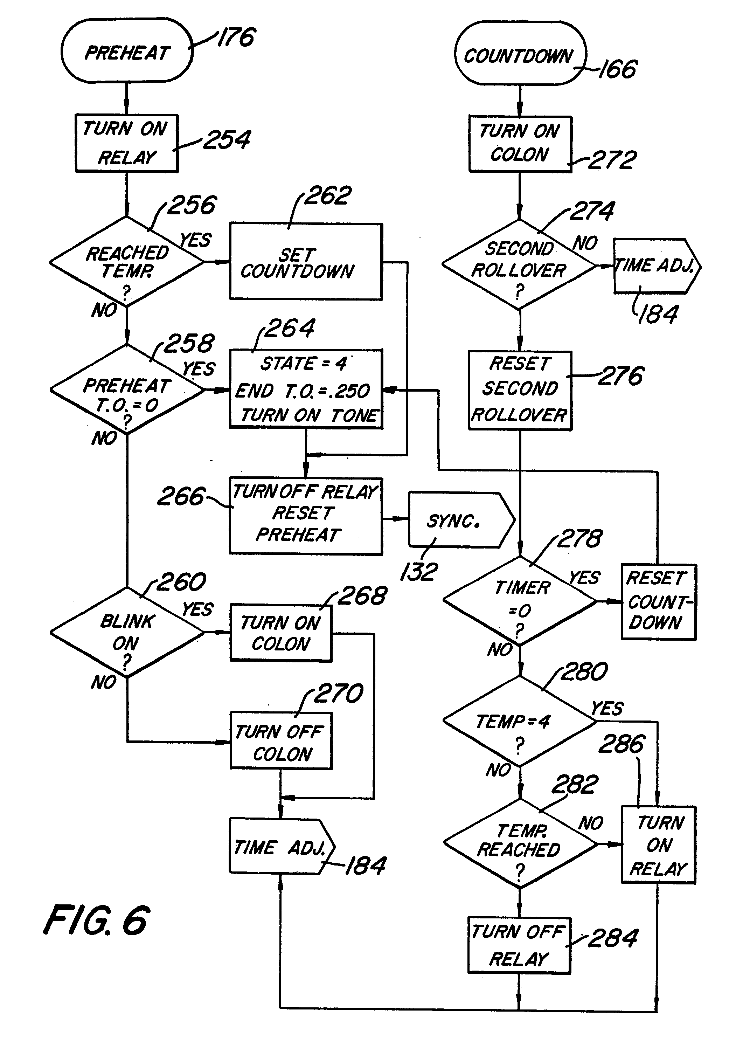

At block 154, if the switch 72 is in the "on" position 73, control passes to block 156.  At block 156, the
signals on conductor 64 and 66 are examined for a defect
signal.  If a defect signal appears on conductor 64, a
probe shorted condition is detected.  Alternatively, if a
defect signal on conductor 66 is detected, a probe open
condition is detected.  If microcomputer 16 determines the
presence of either of these conditions, control passes to
block 158 where the relay 28 associated with heater 32 is
turned off and the sound generator 20 is turned on.  Control then passes back to the SYNC routine 32.  If, on the
other hand, the probe is determined not to be opened or
shorted, control passes to block 160 which examines the
status of a flag associated with a software routine identified as END and labelled 174 (See Figure 6).  If the END
flag is set active, control passes to the END routine 174.
On the other hand, if the END flag is set inactive, control
passes to block 162 which disables the sound generator 18,
20 so that the sound generator 20, if it was previously
producing a tone, is now caused to stop producing the
tone.  Control next passes to block 164 which determines
whether the flag associated with the routine identified as PREHEAT is set active. If the PREHEAT flag is active, control passes to the PREHEAT routine 176 (Figure 7). If the PREHEAT flag is inactive, control passes to the COUNTDOWN routine 166 (Figure 7).

Referring now to figure 4, the SET routine 144 will be explained. The SET routine is entered whenever a new temperature or time setting is entered into the keyboard 12. Control immediately passes to block 180 where the status of switch 72 is checked. If switch 72 is on, control passes to block 212 where the cooking time previously set into memory, such as from a keyboard entry or the remaining time from a prior cooking operation, is provided to the display. Control next passes to block 214 where the SET flag is set inactive and the PREHEAT flag is set active. Control passes to block 216 where an internal timer, identified as a "preheat timeout" is set to sixty minutes. Control passes to block 218 where sub-minute timers associated with each of the internal timers are initialized. Control then is passed back to the SYNC routine 132.

If, when the SET routine 144 was entered, switch 72 was determined to be off at block 180, control would have passed to block 182. At block 182, microcomputer 16 scans the keyboard to determine if any of the temperature switches 50, 52, 54 and 56 have been depressed. If any of the temperature switches 50-56 have been depressed, control is passed to block 196 where the microcoputer is instructed to display the selected temperature, 1-4, on display segment 80 of display panel 14. The selected temperature is also stored in the microcomputer's memory. Thus, the SET routine does not allow a change in the selected temperature setting unless the switch 72 is off. Control passes to block 198 where the time portion of the display, i.e., display segments 76a, 76b and 78 are each set to zero. At block 200, a temperature flag is set to indicate that a temperature has been set. Control passes to block 202 where the internal timer "memory mode timeout" (see block 170) is set to three minutes. Control then passes to the SYNC routine 132.

At block 182, if it is determined that none of the temperature switches have been depressed, control passes to the TIME ADJUST routine 184. The TIME ADJUST routine, at block 186, checks the temperature flag and if the temperature flag is not set, i.e., a temperature selection has not been made, control is passed directly to block 192. On the other hand, if the temperature flag is set, i.e., a temperature setting has been selected, control is passed to block 188 where microcomputer 16 determines if switch 48 is depressed. Thus, microcomputer 16 will not allow a time setting to be selected until a temperature setting has first been selected. If switch 48 is depressed, the user is calling for the desired cooking time to be decremented, and hence control is passed to a routine 204 entitled DOWN where the decrementing function is performed. If, on the other hand, key 46 is depressed, the user is calling for the desired cooking time to be incremented and hence control passes to a routine labeled 206 entitled "UP" which performs the function of incrementing the desired cooking time.

If neither of the switches 46 nor 48 is depressed, control passes to block 192 where the status of the SET flag is checked. If the SET flag is not active, control passes back to the SYNC module 132. If on the other hand, the SET flag is active, control passes to block 208 where the memory mode timeout timer, which was set to 3 minutes at one of blocks 170 and 202, is checked. If the mode timeout timer has been decremented to zero, control is passed to the START 1 routine 150, which in turn passes control to block 130 of the START routine 124. If, on the other hand, the memory mode timeout timer has not been decremented to zero, control is passed to the SYNC routine 132.

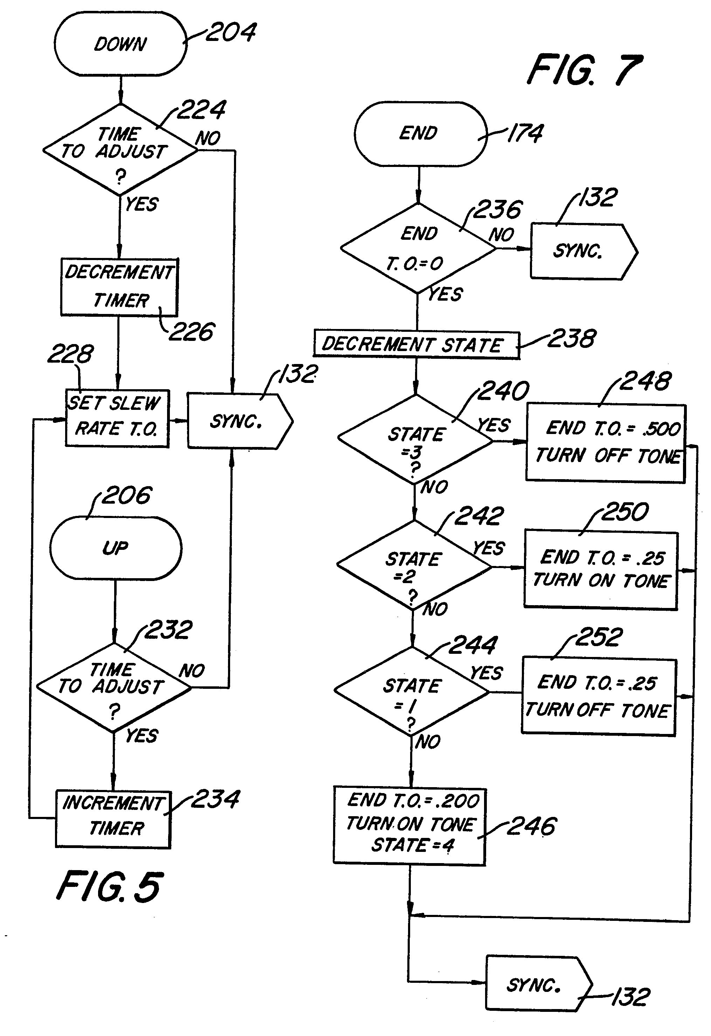

The DOWN and UP routines referred to in connection with the SET routine 144 will now be explained. The DOWN routine 204 and UP routine 206 are illustrated in Figure 5.

It will be recalled that the DOWN routine 204 is entered only when switch 48 on keyboard 12 is depressed. Thus, depression of key 48 is a call for the desired cooking time to be decremented or decreased. When the DOWN routine 204 is entered, control passes immediately to block 224. At block 224 a "slew rate timeout" timer is checked. The "slew rate timeout" is a preselected time between sequential adjustments to the display. That is, it is desired not to change the display too rapidly when switch 48 has been depressed, so as to enable the user to set the precise time desired without much trouble. To this end, a "slew rate timer" is provided which provides a short time delay between subsequent adjustments to the time display when switch 48 has been depressed. Thus, at block 224, if the slew rate timer is not zero, control is passed to the SYNC module 132. It will be recalled that the SYNC module 132 is the module which is responsible for adjusting all internal software timers, incuding the slew rate timer. On the other hand, if the slew rate timer is zero, control is passed to block 226 where the desired cooking time is decremented by one. For example, if the current display reads one hour, thirty-seven minutes, and the switch 48 is depressed, at block 226, the display will be changed to read one hour, thirty-six minutes. Control then passes to block 228 where the slew rate timer is initialized, i.e., set to its starting value. Control is then passed back to the SYNC module 132.

The UP routine 206 is similar in operation to the DOWN routine 204 except that it is responsive to the key 46 and a cooking time is incremented instead of decremented. Thus, at block 232, the slew rate timer is checked. If the slew rate timer is not zero, control passes to the SYNC module 132. However, if the slew rate timer is zero, control passes to block 234 where the cooking time is incremented by one.  Control then passes back to block 228 where the slew rate is initialized, and then control passes back to the SYNC module 132.

It will be appreciated that, by holding either of the keys 46 and 48 in a depressed position, the software will be caused to repeatedly cycle through the respective one of the DOWN routine 204 or UP routine 206 to adjust the cooking time to that desired by the user.

The PREHEAT routine 176 will now be explained. The PREHEAT routine 176 is illustrated in Figure 6.

The PREHEAT routine is entered when a cooking temperature and cooking time have been entered into the keyboard 12 and the switch 72 is in the on position. The purpose of the PREHEAT routine 176 is to prevent the desired cooking time entered into the keyboard 12 and being displayed on the display 14 from being decremented until the selected temperature has been reached. Thus, the timing cycle, which is the desired cooking time entered by the user, is not initiated until the selected temperature has been reached.

Upon entering the PREHEAT routine 176, control is passed immediately to block 254.  At block 254, microcomputer 16 provides an energizing signal on line 68 to energize the relay 28 associated with the heater 32 and thereby energize heater 32.  Control passes to block 256 where the signal on conductor 62 from first comparator 86 is checked to determine if the temperature probe has reached the desired cooking temperature entered into the keyboard 12 by the user.  If the signal on conductor 62 indicates the magnitude of the temperature signal is greater than or equal to the selected temperature, control is passed to block 262 which initiates the timing cycle. Hence, at block 262, the desired cooking time set into the keyboard is begun to be decremented.  Control passes to block 266 where microcomputer 16 deenergizes relay 28 associated with the heater 32, hence deenergizing heating element 32. However, drive motor 34 continues to be energized. Thus, the vessel continues to rotate, although no heat is applied to the vessel at this time. As will be seen, when in cooking modes 1, 2 or 3, if the magnitude of the temperature signal on conductor 88 drops below the value of the reference signal on conductor 98, the relay is turned back on so as to maintain a nearly constant temperature in the cooking vessel. Also at block 266 the PREHEAT flag is reset (set inactive). Control then passes to the SYNC routine 132.

At block 256, if after examining the status of the signal on conductor 62 it is determined that the magnitude of the temperature signal on conductor 88 is less than the magnitude of the first reference signal on line 98 (i.e., the temperature of the vessel contents is less than the selected temperature), control passes to block 258. At block 258, the preheat timeout timer which was set to sixty minutes at block 216 is examined to see if it has been decremented to zero. If the preheat timeout timer is zero, the END flag is set active and a timer entitled "end timeout" is set to 250 milliseconds. Also at block 264, microcomputer 16 supplies an energizing signal on line 74 to energize the sound generator 20. Control then passes to block 266 where the relay 28 is deenergized so as to turn off the heating element 32. It will be understood however, that the drive motor 34 remains activated so that the vessel continues to rotate. Also at block 266, the PREHEAT flag is reset (set inactive). Control then is passed to the SYNC routine 132.

If, at block 258, it is determined that the preheat timeout timer has not been decremented to zero, control passes to block 260. At control block 260, a "blink flag", which is associated with an internal timer called the "blink timer" used to blink the colon 77 in display 14, is checked. The blink timer is used to blink the colon at selected intervals, according to the values set into the blink timer. Thus, at block 260, if the blink flag is high, indicating that the blink timer has timed out, control passes to block 268 where microcomputer 16 illuminates the colon 77. Control then passes to the time adjust routine 184 (figure 4) which is the routine which checks the time set keys to see if the user is setting a new time into the keyboard.

If the blink flag is not set (the blink timer has not timed out), control is passed from block 260 to block 270 where microcomputer 16 turns off the colon 77. It will be appreciated that, by repeatedly executing the PREHEAT routine 176, the colon 77 will be caused to blink on and off at an interval determined by the setting of the blink timer only when the temperature of the vessel contents have not initially reached the selected temperature entered into the keyboard. As will be explained, the colon 77 is maintained in a steady on condition after the temperature of the vessel contents have initially reached the selected temperature.

- In sum, the PREHEAT routine 176 initiates the timing cycle only after the temperature of the vessel contents have initially reached the selected temperature (i.e., after the first time that the magnitude of the temperature signal 88 reaches or exceeds the magnitude of the first reference signal 98. · The PREHEAT routine also provides an indication on the display 14 that the timing cycle has begun, i.e., that the temperature of the vessel contents have initially reached or exceeded a selected temperature.

The operation of the COUNTDOWN routine 166 will now be explained. The COUNTDOWN routine is entered when the PREHEAT routine 176 has determined that the temperature has reached a selected temperature and the entered cooking time must be decremented. That is, the COUNTDOWN routine 166 is entered after the timing cycle has been initiated.

In the COUNTDOWN routine 166, control first passes to block 272 where microcomputer 16 turns on the colon 77. The colon is constantly on, unlike in the PREHEAT routine where the colon blinks. Control passes to block 274 and checks the status of the "roll over flag". The roll over flag is a flag which is active when an internal "roll over timer" indicates that one second has passed since the COUNTDOWN routine was last entered. If the roll over flag is not set (i.e., one second has not elapsed), control is passed to the TIME ADJUST routine 184 to determine if any time adjustment is necessary due to keyboard inputs. On the other hand, if the roll over flag is set (i.e., one second has elapsed), control passes to block 276 where the roll over flag is reset (set inactive) and the roll over timer is initialized. Control passes to block 278 where the status of the timing cycle is checked to determine if the desired cooking time is now completed. If the timing cycle is completed, i.e., the desired cooking time has been decremented to zero, control is passed to block 288 where the COUNTDOWN flag is reset (set inactive). Control then passes back to block 264 where the end time out timer is set to 250 milliseconds, and the sound generator 20 is activated. Control then passes to block 266 where the relay 28 is turned off so as to deenergize heater 32. However, the drive motor 34 remains energized so as to continue to rotate the vessel. At block 266 the PREHEAT flag is reset (set inactive) and control is passed to the SYNC routine 132.

At block 278, if the timing cycle is not completed, i.e., the desired cooking time has not been decremented to zero and there is some cooking time remaining, control passes to block 280. At block 280 a check is made to see if temperature setting or mode 4 was selected. If temperature setting 4 was selected, then control passes to block 286 where the relay 28 is energized and the heating element 32 is turned on. It will be appreciated that if temperature setting 4 has been selected, heating element 32 will remain energized for the entire timing cycle (for the entire cooking time set by the operator) regardless of the temperature achieved in the vessel. Thus, if temperature setting 4 has been selected, the heating element 32 is not cycled on and off to maintain a nearly constant temperature. Control then passes from block 286 to whichever routine is calling for service, i.e., whicheve routine has an active flag.

If, at block 280, it was determined that temperature setting 4 has not been selected (i.e., the controller is in modes 1, 2 or 3) control passes to block 282 where microcomputer 16 examines the status of the signal on line 62 to determine if the temperature of the vessel contents have reached or exceeded the selected temperature. Stated otherwise, microcomputer 16 examines the status of the signal on line 62 to determine if the magnitude of the temperature signal on conductor 88 has reached or exceeded the magnitude of the first reference signal on conductor 98. If the signal on conductor 62 indicates that the selected temperature has been reached or exceeded, control is passed to block 284 where the relay 28 is deenergized so as to deenergize heating element 32. It will be understood however, that the drive motor 34 is maintained energized so as to continue to rotate the vessel. At block 282, if microcomputer 16 determines that the temperature of the vessel contents have not reached the selected temperature control passes to block 286 which energizes relay 28, thereby energizing heating element 32. Control is then passed to whichever routine is calling for service (whichever routine has an active flag).

The final routine in the control algorithm associated with the present invention is the END routine 174, illustrated in Figure 7. The END routine is a time controlled state algorithm which produces the tone at the end of a cooking cycle. This routine has four states. In state 4, a 250 millisecond energizing signal is supplied to the oscillator and amplifier 18 to produce a 250 millisecond tone. In state 3, the oscillator and amplifier is deenergized for 500 milliseconds, thereby providing a 500 millisecond silent period. In state 2, a 250 millisecond energizing signal is provided to oscillator and amplifier 18, thereby providing a 250 millisecond tone. In state 1, the oscillator and amplifier circuit 18 is deenergized for two seconds, thereby providing a two second silent period. Thus, it is the function of the END routine to generate an alternating tone-silence-tone sequence at the end of a timing cycle, i.e., when the cooking cycle is completed.

Upon entering the END routine 174, control immediately passes to block 236. At block 236, the end timeout timer, previously discussed, is checked to see if it has been decremented to zero. If the end timeout timer has not been decremented to zero, control is passed to the SYNC routine 132. On the other hand, if the end timeout timer has been decremented to zero, control is passed to block 238 where the "state" 1, 2, 3 or 4 is decremented from its previous state to the next lowest state. Thus, the first time through the END routine 174, the state is equal to 4. See block 264 which sets the state to 4 after the preheat timeout timer reaches zero. Control passes to block 240 where the state is examined to see if the state is 3. If the state is 3, control passes to block 248 where the end timeout timer is set to 500 milliseconds and the tone is silenced for that period. Control then passes to the SYNC routine 132. If the state was not 3 upon entering block 240, control passes to block 242 to determine if the state is 2. If the state is 2, control passes to block 250 where the end timeout timer is set to 250 milliseconds, and the oscillator and amplifier circuit 18 is energized to provide a 250 millisecond tone. Control then passes to the SYNC routine 132.

If the state was determined not to be 2, control passes to block 244 where the state is examined to see if it is 1. If the state is 1, control passes to block 252 where the end timeout timer is set to 250 milliseconds and the oscillator and amplifier circuit 18 is de-energized to silence the tone for that time period (250 milliseconds).

Control then passes back to the SYNC routine 132.

It will be appreciated that microcomputer 16 repeatedly executes the routines identified herein to provide the desired control function of heating the contents of the vessel and initiating a timing cycle equal in duration to the selected cooking time entered into the keyboard only after the temperature of the vessel contents have initially reached the selected cooking temperature. Thereafter, unless temperature setting 4 has been selected, microcomputer 16 will cycle the heater 32 on and off to maintain the selected cooking temperature. This process will continue for the duration of the cooking time entered by the user into the keyboard. If temperature setting 4 has been selected, the heater 32 will be constantly energized until the timing cycle has been completed. That is, if temperature setting 4 has been selected, the timing cycle will not be initiated until the vessel contents have initially reached a preselected temperature and, after that preselected temperature is initially reached, the heater is maintained in a constant "on" condition until the timing cycle is completed.

The present invention may be embodied in other specific forms without departing from the spirit or essential attributes thereof and, accordingly, reference should be made to the appended claims, rather than to the foregoing specification, as indicating the scope of the invention.

CLAIMS

1.    A controller (10) for a rotary cooking machine
of the type having a rotatable cooking vessel, drive means
(34) for rotating the cooking vessel, heating means (32)
for applying heat to the vessel and its contents and temperature sensing means (24) for sensing the temperature of
the contents of the vessel and generating a temperature
signal indicative of the temperature, the controller characterized by:

        (a)   data entry means (12) for selecting desired
cooking time and desired cooking temperature;

        (b)   display means (14) for providing a visual
display of the selected cooking time and desired cooking
temperature;

        (c)   reference signal generating means (108-122)
responsive to the selected cooking temperature for generating
a reference signal having a magnitude indicative of the
selected cooking temperature;

        (d)   comparison means (86) for comparing the
temperature signal to the reference signal and for providing
a first signal when the magnitude of the temperature signal
is less than the magnitude of the reference signal and a
second signal when the magnitude of the temperature
signal is greater than the magnitude of the reference
signal;

        (e)   counter means (16) for providing a timing
cycle substantially equal in duration to the selected
cooking time, the counter means being responsive to the
first occurrence of the second signal to initiate the
timing cycle only after the vessel contents have initially
reached the selected cooking temperature, the counter
means providing a time out indication when the timing
cycle is completed;

        (f)   heater control means (16, 69) responsive
to the first signal for energizing the heating means and
responsive to the second signal for de-energizing the
heating means.

2.   A controller according to claim 1 wherein the temperature sensing means is a thermistor and being further charactrized by detection means (90, 92) for sensing that the thermistor is in a predetermined condition and for supplying a defect signal upon sensing the existence of the predetermined condition.

3.   A controller according to claim 1 wherein the data entry means is a keyboard (12) and being further characterized by means (14) for displaying the amount of time remaining in the timing cycle.

4.   A controller according to claim 1 wherein the reference signal generating means is characterized by at least a pair of electronic switching devices (116, 118) each having an actuating terminal receiving a digital signal for actuating the switching device, each switching device being actuable to couple a resistor (112, 114) to the node (99) of a voltage divider circuit (108, 110) and thereby alter the voltage at the node (99), the voltage at the node (99) being discretely variable according to the status of the digital signals applied to the actuating terminals, the voltage at the node being the reference signal.

5.   A controller according to claim 2 wherein the detection means is characterized by first and second comparators (90, 92), the first comparator (90) comparing the temperature signal to a first pre-selected voltage and providing a defect signal if the magnitude of the temperature signal is less than the magnitude of the first pre-selected voltage, the second comparator (92) comparing the temperature signal to a second pre-selected voltage and providing a defect signal if the magnitude of the temperature signal is greater than the magnitude of the second pre-selected voltage.

6.   A controller according to claim 1 wherein the heater control means (16, 28) is responsive to the time out indication to deenergize the heating means (32) and being further characterized by audible sound producing means (20) responsive to the time out indication for
providing an audible sound when the timing cycle is completed.

7. A controller according to claim 2 further characterized by audible sound producing means (20) responsive
to the existence of a defect signal for providing an audible
sound.

8. A controller according to claim 1 wherein the
display means (14) is characterized by means for providing
an indication that the vessel contents have not initially
reached the selected cooking temperature entered into the
data entry means.

9. A controller according to claim 8 wherein the
means for providing an indication that the vessel contents
have not initially reached the selected cooking temperature
is characterized by means for flashing a colon (77) associated with the display means.

10. A controller according to claim 5 characterized
by diagnostic means responsive to an initial power up
condition of the controller for automatically testing the
temperature probe for short circuit and open circuit conditions based upon the presence of a defect signal and for
displaying the result of the test on the display means.

11. A controller according to claim 10 wherein the
display means (14) is a multiple segment device and the
diagnostic means is characterized by means responsive to
an initial power up condition of the controller to individually test each segment of the multiple segment device.

12. In a rotary cooking machine of the type having a
rotatable cooking vessel rotated by a drive motor (34), a
heating element (32) disposed adjacent to the cooking
vessel for applying heat to the vessel and its contents, a
temperature probe (24) disposed in the vessel for sensing
the temperature of the contents of the vessel and generating a temperature signal indicative of the temperature,
a control apparatus (10) characterized by:

(a) a key pad (12) for selectively entering data indicative of desired cooking time and cooking temperature;

(b) a multiple segment display device (14) for providing a visual indication of the selected cooking temperature and cooking time and remaining cooking time;

(c) a reference signal generation circuit (108-122) for providing a reference signal having a magnitude indicative of the desired cooking temperature entered into the keyboard (12) comprising a voltage divider circuit (108, 110), switch means (116, 118) and resistor means (112, 114) operatively coupled to a node (99) of the voltage divider circuit, the switch means (116, 118) being actuable according to the selected cooking temperature to selectively place the resistor means (112, 114) in the voltage divider circuit (108, 110) and thereby alter the voltage appearing at the node (99) of the voltage divider (108, 110), the voltage at the node being the reference signal;

(d) a first comparator (86) for comparing the temperature signal to the reference signal and providing a first signal when the magnitude of the temperature signal is less than the magnitude of the reference signal and a second signal when the magnitude of the temperature signal is greater than the magnitude of the reference signal;

(e) a microcomputor (16) operatively coupled to the key pad (12), multiple segment display (14), switching means (116, 118), and heating element (32), and receiving the first and second signals from the first comparator (86), the microcomputer (16) being programmed to (1) receive the cooking temperature entered into the key pad (12) and selectively actuate the switch means (116, 118) to provide the reference signal, (2) initiate a timing cycle having a duration equal to the desired cooking time upon the first occurrence of the second signal, (3) energize the heating element (32) in response to the occurrence of the first signal and deenergize the heating element (32) in response to the occurrence of the second signal, (4) provide to the multiple segment display (14) data indicative of actual remaining cooking time, and (5) de-energize the heating element (32) after the timing cycle is completed.

13. Control apparatus according to claim 12 further characterized by second and third comparators (90, 92) for comparing the temperature signal to upper and lower signals representative of open circuit and short circuit conditions, respectively, in the temperature probe (24), the second comparator (90) providing an indication to the microprocessor if the magnitude of the temperature signal is greater than the magnitude of the upper signal, the third comparator (92) providing an indication to the microprocessor if the magnitude of the temperature signal is less than the magnitude of the lower signal, the microcomputer (16) being programmed to be responsive to the occurrence of an indication from one of the second and third comparators (90, 92) to deenergize the heating element.

14. Control apparatus according to claim 13 further characterized by audible sound producing means (20) for providing an audible indication, the audible sound producing means (20) being operatively coupled to the microcomputer (16), the microcomputer (16) being programmed to provide the audible indication upon the completion of the timing cycle and also upon receiving the indication from either of the second or third comparators (90, 92).

15. Control apparatus according to claim 13 wherein the microcomputer (16) is responsive to a power up condition to perform a diagnostic test of the temperature probe (24) to check for open circuit and short circuit conditions and displaying the result of the diagnostic test upon the multiple segment display (14), and is further responsive to a power up condition to test each segment of the multiple segment display (14) by sequentially energizing each of the individual segments.

16. Control apparatus according to claim 12 further characterized by an on/off switch (72) coupled to the microcomputer (16) and to the drive motor (34), the microcomputer (16) being responsive to accept cooking temperature data entered into the keyboard (12) only when the switch (72) is in the off position, the drive motor (34) rotating the cooking vessel only when the switch (72) is in the on position, the microcomputer (16) being responsive to the transition of the on/off switch (72) from the off position to the on position to energize the heating element (32).

17. A method of controlling a rotary cooking machine of the type having a rotatable cooking vessel, a drive motor (34) for rotating the cooking vessel, a heating element (32) disposed adjacent to the cooking vessel for applying heat to the contents of the vessel, and a temperature probe (24) for generating a temperature signal indicative of the temperature, the method characterized by the steps of:

(a) providing an indication of desired cooking time and desired cooking temperature;

(b) providing a visual display of the indications of the desired cooking time and desired cooking temperature;

(c) energizing the drive motor (34) and heating element (32);

(d) monitoring the temperature signal and initiating a timing cycle equal in duration to the desired cooking time when the temperature initially reaches the desired cooking temperature;

(e) updating the visual display to provide an indication of remaining cooking time based upon the status of the timing cycle;

(f) selectively energizing and de-energizing the heating element (32) during the timing cycle based upon the magnitude of the temperature signal to maintain the contents of the vessel at substantially the selected cooking temperature;

(g) de-energizing the heating element and providing an audible sound when the duration of the timing cycle reaches the desired cooking time.

18. A method according to claim 17 characterized by the steps of;

(h) determining whether the temperature probe is defective based upon a comparison with pre-selected reference values;

(i) providing the audible sound if the temperature probe is determined to be defective.

19. A method according to claim 18 characterized by the steps of:

(j) sensing that a power-up condition has occurred and performing a diagnostic test of the temperature probe upon sensing a power-up condition;

(k) providing the audible sound if the diagnostic test determines that the temperature probe is defective.

20. A method according to claim 17 wherein the step of initiating a timing cycle is characterized by loading a counter with the desired cooking time and decrementing the counter when the temperature initially reaches the desired cooking temperature, and the step of de-energizing the heating element and providing the audible sound when the timing cycle reaches the desired cooking time comprises sensing that the counter has reached a zero value.

21. In a cooker of the type having an open-mouthed, rotatable vessel, a drive motor (34) for rotating the vessel about its longitudinal axis, a lid for closing the open-mouth of the vessel and having an air vent, a heating element (32) disposed adjacent to the vessel for applying heat to the vessel and its contents, a temperature probe (24) extending through the lid and protruding into the vessel for sensing the temperature of the contents of the vessel and providing a temperature signal indicative of the temperature, a controller characterized by:

(a) a keyboard (12) for entering an indication of desired cooking temperature and desired cooking time;

(b)   a multiplexed display panel (14) for displaying the indications of desired cooking time and desired
cooking temperature and for displaying an indication of
remaining cooking time;

(c)   a first reference signal generator (108-122)
comprising first and second switch means (116, 118) and
first and second resistors (112, 114) associated therewith,
a voltage divider circuit (108, 110) having a node (99)
providing a first reference signal, the first and second
switch means (116, 118) being selectively actuable to
place ones of the first and second resistors (112, 114) in
the voltage divider circuit (108, 110) and thereby alter
the magnitude of the first reference signal and provide up
to four different magnitudes of the first reference signal;

(d)   second and third reference signal generators (100, 102, 104, 106) for providing second and third
signals having magnitudes representative of maximum and
minimum acceptable magnitudes, respectively, of the temperature signal;

(e)   first, second and third comparators (86,
90, 92) for comparing the magnitude of the temperature
signal to the first, second and third reference signals,
respectively, and for providing signals indicative of
whether the magnitude of the temperature signal exceeds
or fails to exceed the magnitude of each of the first,
second, and third reference signals;

(f)   a sound generator (20);

(g)   a microcomputer (16) operatively connected
to the keyboard (12), first, second and third
comparators (86, 90, 92), first and second switch means
(116, 118), heating element (32), sound generator (20) and
display (14), the microcomputer (16) having means for (1)
supplying actuating signals to the first and second switch
means (116, 118) for altering the magnitude of the first
reference signal according to the cooking temperature
entered into the keyboard; (2) energizing the heating
element (32) when the signal from the first comparator (86) indicates that the magnitude of the temperature signal is less than the magnitude of the reference signal; (3) de-energizing the heating element (32) when the signal from the first comparator (86) indicates that the magnitude of the temperature signal is greater than the magnitude of the reference signal; (4) de-energizing the heating element upon the occurrence of selected signals from one of the second or third comparators (90, 92); (5) initiating a timing cycle equal in duration to the cooking time entered into the keyboard (12) only after the first comparator (86) provides the signal indicative that the magnitude of the temperature signal has reached or exceeded the magnitude of the first reference signal; (6) de-energizing the heating element (32) when the timing cycle is completed; (7) energizing the sound generator (20) upon the completion of the timing cycle and upon the occurrence of a seleced signal from one of the second or third comparators (90, 92).

0168985

FIG.1

**FIG. 2**

FIG. 3

0168985

# FIG. 4

SET — 144

ON? → YES → MOVE MEMORY TO DISPLAY — 212

180

NO → 182

TEMP SW. PUSHED ? → YES → SET TEMP. — 196

RESET SET SET PREHEAT — 214

NO

TIME ADJ. — 184

SET DISPLAY = 0:00 — 198

SET PREHEAT T.O. = 60 MINUTES — 216

SET TEMP. & MEMORY FLAGS — 200

INIT. TIMERS — 218

TEMP FLAG SET ? — 186

NO

SET MODE T.O. = 3 MINUTES — 202

SYNC. — 132

YES

DOWN TIME ? — 188 → DOWN — 204

NO

UP TIME ? — 190 → UP — 206

SET STATE? — 192 → YES → MODE T.O. = 0 ? — 208 → NO

NO

YES

SYNC — 132 → START 1 — 150

0168985

FIG. 7

FIG. 5

0168985

FIG. 6

0168985

**European Patent Office**

**EUROPEAN SEARCH REPORT**

Application number

EP 85 30 4397

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 072 000 (ARTHUR D. LITTLE) <br> * Page 4, lines 73-75; page 4, line 124 - page 5, line 27 * & US - A - 4 304 177 (Cat. D) | 1,12, 17,21 | A 47 J 37/04 <br> A 47 J 27/62 <br> G 05 D 23/24 |
| Y | GB-A-2 114 320 (TOKIO SHIBAURA DENKI) <br> * Page 2, lines 90-128 * | 1,12, 17,21 | |
| A | US-A-3 979 056 (M.J. BARNES) <br><br> * Claims 8,13; column 6, lines 17-34 * | 2,10, 15,18 | |
| A | GB-A-2 029 722 (THE PRESTIGE GROUP) <br> * Page 2, lines 39-114; figure 2; page 2, lines 123-125 * | 3,6 | TECHNICAL FIELDS SEARCHED (Int. Cl.4) |
| A | US-A-3 789 853 (REINHARD) <br> * Figure 1; column 3, lines 35-53 * | 2,5,13 | A 47 J <br> G 05 D |
| A | GB-A-2 073 455 (APPLIANCE CONTROL SYSTEMS PTY.) <br><br> * Page 3, lines 112-115; claim 28; page 6, lines 40-44; page 7, lines 41-46 * | 3,6-8, 14,19, 20 | |

The present search report has been drawn up for all claims

| Place of search | Date of completion of the search | Examiner |
|---|---|---|
| THE HAGUE | 30-09-1985 | BEUGELING G.L.H. |